# EUROPEAN PATENT SPECIFICATION

(11) **EP 3 419 812 B1**
(45) Date of publication and mention of the grant of the patent: **23.09.2020**
(21) Application number: 17705437.6
(22) Date of filing: 21.02.2017
(51) Int. Cl.: B29C 65/20, F16L 59/20

(54) **METHOD FOR PRODUCING SINGLE INSULATED PIPES**
VERFAHREN ZUR HERSTELLUNG EINZELNER ISOLIERTER ROHRE
PROCÉDÉ DE PRODUCTION DE TUYAUX ISOLÉS UNIQUES

(30) Priority: 24.02.2016 EP 16157066
(43) Date of publication of application: 02.01.2019
(73) Proprietor: Logstor A/S, 9670 Løgstør (DK)
(72) Inventor: JENSEN, Knud Hjort, 7900 Nykøbing M (DK); KOLK, Roeland, 8831 Løgstrup (DK)
(74) Representative: Zacco Denmark A/S
(86) International application number: PCT/EP2017/053908
(87) International publication number: WO 2017/144450

(56) References cited:
- WO-A1-2013/154432
- FR-A5- 2 042 814

## Description

The invention relates to a method for producing an insulated pipe having an inner coating and a casing, where the insulated pipe is for transporting fluids such as oil or gas. The method provides for a way for sealing an inner coating and a casing in a pipe.

### Background

Fluids such as oil and gas are often transported to or from offshore installations or from one coastal line to another through long continuous pipeline systems laid out below or on the seabed. The pipelines therefore naturally have to be able to sustain the very special conditions and extreme structural demands, which are not uncommon, combined with the environment being very corrosion aggressive. These conditions necessitate high demands on especially the tightness of the pipelines, which are normally constituted by a plurality of joined pipes.

Different types of pipelines are used for such offshore applications including simple single un-insulated pipes, pipe-in-pipe systems with or without insulation material between the pipes and pre-insulated composite pipelines. The type of pipeline system depends among others on the fluid to be transported and on the sea depths from where it is to be transported, as the pressure increases at lower sea depths.

In applications of transporting oil, the oil is very often mixed with gasses and water resulting in methane hydrates forming in the mixture. If the mixture cools, e.g. if the pipelines are not sufficiently thermally insulated, the cooled methane hydrates solidify on the pipe walls eventually clogging the pipeline. In order to avoid this, additives such as methanol and glycols are added to the oil/gas mixture which then, however, are to be boiled off at the receiving station and returned for reuse. Thermally insulated pipelines are also often necessary as the viscosity of some crude oils is too high to be pumped if the temperature of the oil becomes too low.

Thermally insulated pipes may comprise one or more inner carrier pipes of metal with a coating, one or more insulation layers possibly made of polyurethane foam and a casing pipe, normally comprising one or more polymer materials. A common problem with these pipelines is that imperfections or damage in the casing of the insulated pipes and/or in the joining of these leads to crack formation allowing seawater to diffuse in between the layers of the insulated pipes. A single point of entry can cause the insulation capability of a significant section of the pipeline to be reduced considerably, which can lead to solidifying methane hydrates and can further make the pumping of high viscosity oils very difficult if not impossible.

The costs associated with production stop and repairing of pipelines are huge, and the risk of damaging the pipeline on repair as a whole is great. Therefore, single insulated pipes wherein the thermal insulation layer is confined inside by a casing and closed at both ends are preferably used. If seawater has diffused into the thermal insulation layer on a single pipe, it will not spread along the pipeline, and it is likely that the drop in fluid temperature along this single pipe will only have a minor effect on the overall fluid temperature. Hence, it does not prevent functionality of the entire pipeline, and the costly process of replacing and/or repairing the pipeline can be avoided. Even if repair of the pipeline is necessary, the costs of the process are significantly lower as only the single pipe and not the entire pipeline needs to be repaired.

One example of the single insulated pipes used today comprises a fusion bonded epoxy coating layer and/or a polyethylene (PE) or polypropylene (PP) coating layer on the steel pipe (inner carrier pipe), a thermal insulation layer and a PE or PP casing. At the ends of the steel pipe, the thermal insulation layer is sealed in by the joining of the casing and the coating by using e.g. mastic, which functions as sealant or a double sided tape.

Using mastic as the joining material provides a good and effective seal at limited fluid temperatures. However, oil drilled from subsoil with temperatures of up to 140°C has been observed. When mastic is exposed to such temperatures, it changes state, whereby the seal between the layers delaminates allowing for seawater to diffuse into the insulation layer. As a consequence, sealing in the insulation layer by use of mastic cannot be used when drilling subsoil with high temperatures.

WO2012/041316 discloses an alternative solution for sealing the casing and the inner coating using electrically conductive means in the form of an electrically conducting welding band. By using a welding band, it is possible to create a wide welding belt thereby creating a stronger seal compared to the mastic solution. Using such a welding band however is a cumbersome process, as the production line needs to be stopped when the welding band is mounted. The production line can thus no longer be a continuous line.

Also WO2012/041316 discloses that the inner carrier pipe placed underneath the inner coating needs to be pre-heated prior to using the welding band as the inner steel pipe would otherwise absorb all the heat in the welding process whereby the inner coating would not be properly heated at the same time as the casing would start to overheat making the welding process nearly impossible when using the welding band.

WO2013154432 discloses a method of manufacturing a Field Joint Coating (FJC) for a pipeline. The method of WO2013154432 comprises the steps of a) providing a pipe section to be joined to a similar pipe section or free end of a pipeline, wherein each pipe section is provided with a coating comprising of at least a thermal insulation layer over a substantial portion of the length of the pipe section having a protruding section, wherein the end zones of each pipe section are free of thermal insulation, thereby allowing access to the ends of the pipe section and the pipeline from the outside in order to connect the pipe section with the free end of the pipeline, b) after the connecting of the pipe section to the free end of the pipeline, applying an anti-corrosion coating layer on a connection region of the joined ends of the pipe section and the pipeline, c) heating the protruding section and applying an intermediate coating layer of a thermoplastic material on the anti-corrosion coating layer and the protruding section, and c) applying a thermal insulation layer on the intermediate coating layer.

FR2042814 discloses a jointing system for sheathed, foam-lagged steel conduits. The conduits are effected by butt welding or adhesion of exposed pipe ends, overlaying of the tapered and sheathed jacket limits with seal sheeting of e.g. butyl rubber or polyolefin film, lagging the joint zone with heat resistant polyurethane foam, and sealing the sprayed up foam with wound or heat shrunk PVC or polyolefin tape or tubing.

### Description of the invention

Disclosed herein is a method for producing insulated pipes (100) comprising an inner pipe (102), a casing layer (108) and insulation material (106), where the insulated pipe has an improved protection of the insulation material.

The method comprises in a first step providing a pipe system comprising:
- an inner pipe with a longitudinal axis (L) extending from a first end of the inner pipe to a second end of the inner pipe, the inner pipe comprising a middle section, a first end section at the first end of the inner pipe, and a second end section at the second end of the inner pipe;
- a layer of inner coating covering the inner pipe, the layer of inner coating comprising one or more inner coating sub layers;
- one or more layers of insulation material covering the layer of inner coating such that:
   - the insulation layer covers the middle section of the inner pipe covered by the inner coating,
   - the ends of the insulation layer tapers towards the end sections, and the end sections comprises a section with an exposed layer of inner coating.

A smaller portion of the inner pipe will normally also be exposed at the end sections of the inner pipe.

The method further comprises in a subsequent step positioning a jaw around the exposed layer of inner coating at the **first end** section of the inner pipe, heating the exposed layer of inner coating (104') using the jaw (204) to a temperature near or above the welding temperature of the materials which the inner coating (104) and a casing layer (108, 110) are made of, removing the jaw (204), and covering the exposed layer of inner coating (104') and the insulation layer (106) with a layer of casing (108) extruded from a casing extruder.

In this manner, the exposed layer of inner coating at the first end of the inner pipe is welded together with the layer of coating extruded onto the inner coating.

The method further comprises the steps of positioning a jaw around the exposed layer of inner coating at the **second end** section of the inner pipe, heating the exposed layer of inner coating using the jaw to a temperature near or above the welding temperature of the materials which the inner coating and the casing layer are made of, removing the jaw, and covering the exposed layer of inner coating at the second end section of the inner pipe with a layer of casing extruded from the casing extruder.

In this manner, the exposed layer of inner coating at the second end of the inner pipe is welded together with the layer of coating extruded onto the inner coating. The jaw used for welding the inner coating and the casing at the second end of the pipe may be the same jaw as the one used for welding the inner coating and the casing at the first end of the pipe. Alternatively, it may be another jaw. If the two jaws are two different jaw, they may be positioned around the first end of the pipe and the second end of the pipe at the same time during the method.

By the above method, a strong seal between the casing and the inner coating in the insulated pipe is obtained, which allows for an effective encapsulation of e.g. insulation material placed in between the casing and the inner coating. The strong seal of the two layers is advantageous compared to different types of glue or sealants previously used to seal the two layers, as the welding together of the two materials forms a stronger sealing compared to glue sealing. Also, the process can be kept continuous, as no 'stops' to insert e.g. a mastic layer or an electrically conducting welding band are required.

The strong welding of the casing and the inner coating is in particular relevant when a pipeline comprising pipes according to the above is laid out below or on the seabed, where it has to be able to sustain the very special conditions from the surroundings, where external pressure of 20 bars or more is not uncommon combined with the environment being very corrosion aggressive. Further, it is highly advantageous to use a welding process to integrate the casing and the inner coating, as it allows for transportation of e.g. subsoil with temperatures of up to 140°C, since delamination between the layers does not occur with this type of sealing before much higher temperatures as opposed to a mastic-based sealing of the layers. It is thereby avoided that seawater will diffuse into an insulation layer placed in between the casing and the inner coating thereby destroying the insulation properties.

Also disclosed herein is an insulated pipe produced using the method described above.

### Brief description of the drawings

Figures 1, 2A-B and 3 illustrate a different angle view of a single pipe produced by the method according to the invention.
Figures 4-5 illustrate the method for producing an insulated pipe.
Figure 6 illustrates a jaw used in the method for producing an insulated pipe.

### Description of preferred embodiments

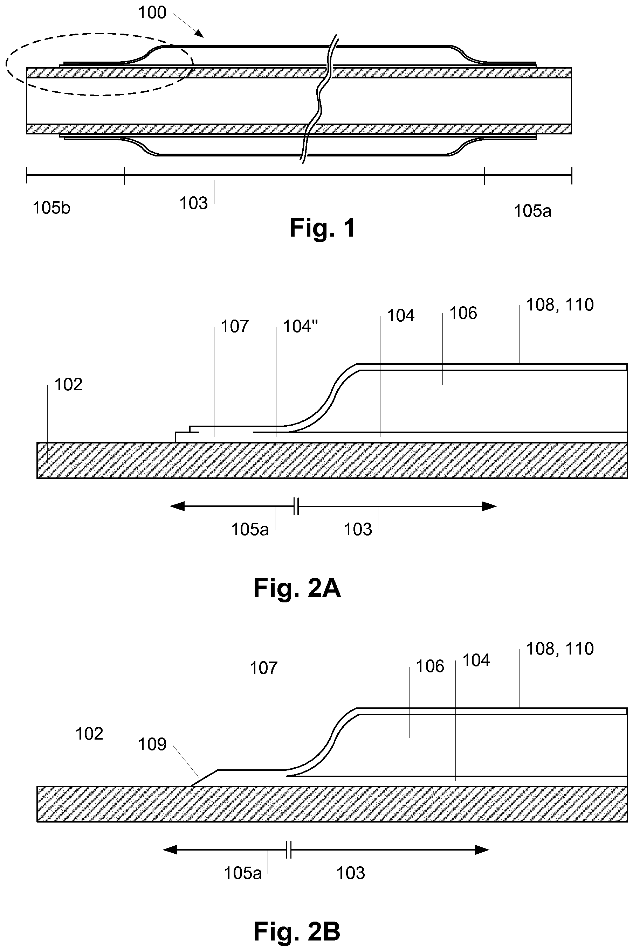

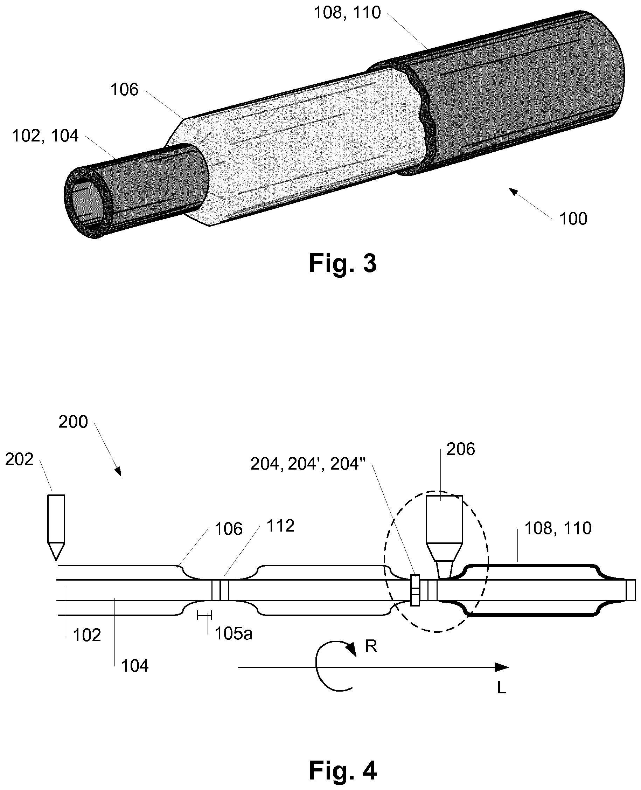

In figure 1 a single insulated pipe 100 produced by the method according to the invention is shown in a longitudinal cross sectional view. Figures 2A-B show the close up of the pipe 100 marked with the circle in the cross sectional view in figure 1. In figure 2A, the pipe is nearly finished whereas in figure 2B, the last finishing touch of milling the edge has been performed. Figure 3 illustrates the pipe 100 in an isometric view showing the different layers.

The pipe 100 comprises an inner carrier pipe 102 of metal, normally steel, with a layer of inner coating 104. The inner coating layer 104 may be a three-layer coating, which may comprises a thin epoxy layer placed directly on the outside of the inner carrier pipe 102 in order to protect against corrosion, a polypropylene (PP) based layer, and a layer of glue in between the epoxy and the PP based layers holding these two layers together. As an alternative to using the PP-based material in the three-layer coating, polyethylene (PE) based materials or other polymeric materials can also be used. Thus, in one or more embodiments, the material of the inner coating is polypropylene or polyethylene (PE).

In one or more embodiments, the thickness of the inner coating is between 2-10 mm.

In one or more embodiments, the thickness of the inner coating is between 2,5-8 mm.

In one or more embodiments, the thickness of the inner coating is between 3-6,5 mm.

In one or more embodiments, the thickness of the inner coating is between 3-5 mm.

The pipe 100 also comprises a thermal insulation layer 106. The insulation layer is normally a polyurethane foam layer. Thus, in one or more embodiments, the insulation material is polyurethane (PUR) foam. The insulation layer 106 may consist of one or more layers of solid or partly foamed thermoset or thermoplastic polymers.

On the outer part of the pipe 100, a layer of casing 108 is present. The casing layer 108 may also comprise a thin outer layer of rough coating 110. Both the casing 108 and the rough coating 110 is normally of a PP-based material or a PE-based material. The rough coating 110 will normally consist of very small pieces of material applied to the casing 108 in order to provide the pipe 100 with a rough surface to increase friction when handled, e.g. lifted and/or turned around, during the assembly and/or insertion into the water. Thus, in one or more embodiments, the material of the casing is PP or PE. PP or PE is preferred as a sealed interface between two layers of PP or PE, respectively, can withstand the high temperatures inside the pipe, when the pipe is used to transport e.g. subsoil and at the same time withstand the low temperatures of the sea when put on or below the seabed.

The inner pipe 102 comprises a middle section 103 extending over the main part of the pipe in a longitudinal direction L, and two end sections including a first end section 105a at a first end of the inner pipe 102 and a second end section 105b at a second end of the inner pipe 102.

Towards the end sections 105a, 105b, the thermal insulation layer 106 is tapered thereby creating an assembly face 107 for joining the inner coating 104 and the casing 108 at the end sections 105a, 105b. This provides an effective sealing of the insulation layer 106.

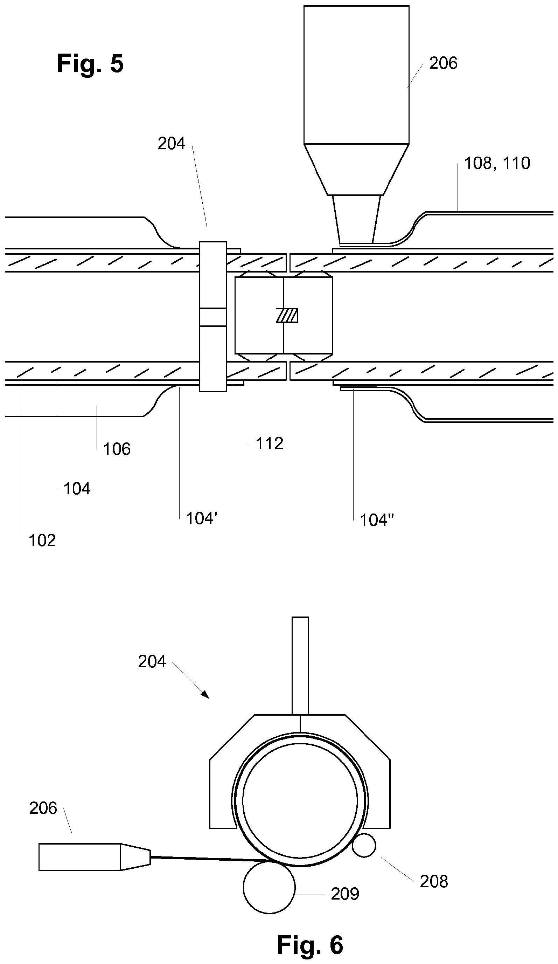

The method for producing the insulated pipe 100 shown in figures 1-3 are illustrated in figures 4-6. Figure 5 is a close-up of the area marked with the dotted circle in figure 4.

The production method comprises a number of steps, where first a number of pipe systems, at least one pipe system, are provided. The pipe system comprises an inner pipe 102, a layer of inner coating 104 covering the inner pipe 102, and one or more layers of insulation material 106 covering the layer of inner coating 104 as described above.

The inner pipes 102 are normally connected end to end using end joining tools 112 inside or outside the inner pipes 102, thereby forming one long pipeline comprising a number of interconnected inner pipes 102. In figure 5, an example of an inner joining tool 112 is shown. In one or more embodiments, end joining tools 112 positioned between two inner pipes 102 are used to connect inner pipes 102, thereby forming a pipeline comprising a number of interconnected inner pipes 102. The end joining tools 112 will normally be removed again after the pipe system has been fully covered by the casing layer 108 (as described in the following) thereby providing a number of separated insulated pipes 100.

The pipe line is positioned on a line moving the pipe system(s) in the direction along the longitudinal axis of the pipe systems indicated by the arrow with the marking 'L'. This may be done using a number of slightly pitched rollers (not shown in the figures), which rotates. As the rollers rotate, the pipe systems(s) also rotate as indicated in figure 4 with the 'R' arrow. Due to the pitch of the rollers, the pipe system(s) are moved forward along the line in the direction 'L'. Typically the pipe system(s) are moved forward 3-8 cm per revolution.

As an alternative to moving the pipe system(s) forward, the different extruders for applying the different layer onto the inner pipe (see the following text for details), may instead be moved in the opposite direction of L combined a rotation of the inner pipe(s) 102.

Each of the inner pipes 102 are covered with a layer of inner coating comprising one or more inner coating sub layers. Applying the layer of inner coating onto the inner pipe is performed prior to connecting the inner pipes 102. Thus, the inner pipes 102 can be received pre-coated before the method described herein is started or the pre-coating can be setup to occur close by or in direct connection to the pipe line used here.

The inner pipe(s) 102 with a layer of inner coating 104 is covered with one or more layers of insulation material 106 such that the insulation layer 106 covers the middle section 103 of the inner pipe 102 covered by the inner coating 104. The end sections 105a, 105b of the inner pipe comprises an exposed layer of inner coating and an additional section at the very ends of the inner pipes, where the inner pipes are exposed, i.e. not covered by the exposed layer of inner coating. The insulation material is applied forming tapered ends towards the sections 105a, 105b of the inner pipe (102).

The insulation layer 106 may be applied using spray application 202 as shown in figure 4. Thus, in one or more embodiments covering the layer of inner coating with one or more layers of insulation material is done by spray application using one or more insulation layer sprayers 202 while the pipe is rotated along the longitudinal axis L. Two or more layers of insulation material 106 can possibly be applied.

Alternatively, the a mould may be used for foaming in. After foaming in a mould, the mould is removed and a pipe with the inner coating layer 104 an the insulation layer 106 is obtained and ready for use in the method according to this invention. Thus, in one or more embodiments, covering the layer of inner coating with one or more layers of insulation material is done by positioned a mould around the inner pipe, foaming in the mould and subsequently removing the mould.

After applying the one or more layers of insulation material 106 in one of the above described manners or in an alternative manner not described herein, a jaw 204, 204' is positioned around the exposed layer of inner coating 104' at the first end section 105a of the inner pipe 102. The jaw 204' heats a section of the exposed layer of inner coating 104' to a temperature near or above the welding temperature of the materials which the inner coating and the casing 108, 110 (applied in a later step) are made of.

When heating the exposed layer of inner coating 104' it is important that the inner coating has a thickness preventing that the underlying inner pipe 102 extracts the heat yielding a too low temperature of the inner coating 104'. The previous attempts to weld casing and coating layers together using e.g. a welding band proved quite difficult, if not impossible, as the inner carrier pipe absorbed much of the heat from the inner coating with the consequence that the casing was heated too severely allowing it to overheat while the coating remained inadequately heated. By heating the exposed layer of inner coating 104' prior to applying the casing, the previously observed problems with an overheated casing and a 'cold' inner coating are avoided. Also, the previously required pre-heating of the inner pipe prior to the welding of the inner coating and the casing is also avoided. In some embodiments, the inner pipe may be heated before applying the insulation layer to ensure a good reaction of this. Furthermore, the reaction of the insulation foam is applied directly before the method of this invention is started, heats the inner pipe further.

Just before a layer of casing 108 is applied to the first end 105a section of the inner pipe 102, the jaw 204' is removed and the exposed layer of inner coating 104' and the insulation layer 106 is covered with a layer of casing 108 extruded from a casing extruder 206. Possibly a second layer of coating 110 is applied on top of the inner coating 108. This layer can be an extruded layer of a thin outer ruffled coating layer 110, which is sprinkled onto the first coating layer 108.

As the front most end of the pipe system and the casing extruder 206 are moved towards each other in the direction L, and the front most end of the pipe system pass the casing extruder 206 (thereby covering the insulation layer 106 with a coating layer), a jaw 204" is positioned around the exposed layer of inner coating 104" at the second end section 105b of the inner pipe. This jaw 204" can be the same as the first mentioned jaw 204' used for heating up the first end section 105a of the inner pipe 102 or alternatively a second jaw 204".

In the same manner as with heating the inner coating 104' at the first end section 105a with the jaw 204', the exposed layer of inner coating at the second end section 105b is heated using the jaw 204" to a temperature near or above the welding temperature of the materials which the inner coating 104 and the casing layer 108, 110 are made of.

The jaw 204" is subsequently removed and the exposed layer of inner coating 104" at the second end section 105b of the inner pipe 102 is covered with a layer of casing 108 extruded from the casing extruder 206.

In one or more embodiments, the pipe system is positioned on a line moving the pipe system in a longitudinal direction L towards and pass the casing extruder 206 during the production of the insulated pipe 100. The pipe system may be constantly being rotated R around the longitudinal axis L as the pipe system moves along the line.

In one or more embodiments, after the jaw 204', 204" is positioning around the exposed layer of inner coating 104', 104", the jaw 204', 204" moves along with the pipe system in the longitudinal direction L at the same speed as the pipe system before the jaw 204', 204" is removed.

In one or more embodiments, removing the jaw 204', 204" is done when the distance between the jaw 204', 204" and the casing extruder 206 is less than 5 cm. In some embodiments, the distance is between 1-5 cm. In some embodiments, the distance is between 1-2 cm.

Figure 6 shows an example of a jaw 204 which can be used in the above method. The jaw 204 in figure 6 represent the jaws 204', 204".

In one or more embodiments, the jaw 204', 204" is heated using radiant heating.

In one or more embodiments, the welding temperature to which the exposed layer of inner coating 104', 104" is heated is between 180-240 °C.

In one or more embodiments, the welding temperature to which the exposed layer of inner coating 104', 104" is heated is between 200-240 °C.

In one or more embodiments, the welding temperature to which the exposed layer of inner coating 104', 104" is heated is between 220-240 °C

In one or more embodiments, the welding temperature to which the exposed layer of inner coating 104', 104" is heated is between 230-240 °C

In one or more embodiments, the welding temperature to which the exposed layer of inner coating 104', 104" is heated is 235 °C.

In one or more embodiments, the casing 108 is extruded onto the exposed layer of inner coating 104', 104" and the insulation layer 106 by moving the pipe system pass the casing extruder 206.

In one or more embodiments, the casing 108 is extruded onto the exposed layer of inner coating 104', 104" and the insulation layer 106 by moving the casing extruder 206 along the longitudinal axis L of the pipe system.

In one or more embodiments, the pipe system is rotated along the longitudinal axis L of the pipe while the pipe system and the casing extruder 206 moves in relation to each other, and the layer of casing 108 is extruded onto the exposed layers of inner coating 104', 104" and the insulation layer 106. In this manner, the casing layer 108 is applied onto the pipe system in a spiral, wherein the rotation of the pipe system and the movement of the pipe system and the extruder in relation to each other is adjusted such that there is an overlap between consecutive casing layers.

In one or more embodiments, the overlap between consecutive casing layers is between 1-10 cm.

In one or more embodiments, the overlap between consecutive casing layers is between 3-8 cm.

In one or more embodiments, the overlap between consecutive casing layers is between 4-6 cm.

In one or more embodiments, the overlap between consecutive casing layers is 5 cm.

In one or more embodiments, the temperature to which the coating is heated is measured by an infrared thermometer.

In one or more embodiments, one or more pressure rolls 208 are applied onto the layer of casing applied over the exposed layer of inner coating pressuring the casing 108 closer to the inner coating 104', 104". This occurs primarily in the welding zone. In one or more embodiments, the one or more pressure rolls 208 are also applied onto the layer of casing applied over the entire pipe. Thus, pressure roll(s) are used over the entire pipe and not just in the welding zone area.

In one or more embodiments, only one pressure roll 208 is applied. Thus the same pressure roll may sufficiently be used for applying a pressure on the casing over the entire pipe.

In one or more embodiments, two or more pressure rolls 208, 209 are applied. As is illustrated in figure 6, the pressure roll 209 may be a larger pressure roll than the pressure roll 208. The larger pressure roll 209 may be used for the applying a pressure onto the casing layer(s) covering the middle section 103 of the pipe, whereas the smaller pressure roll 208 may be used in the welding zone, where the insulation material 106 tappers towards.

In one or more embodiments, a first pressure roll 208 is applied onto the layer of casing applied over the exposed layer of inner coating in step e) and i) pressuring the casing 108 closer to the inner coating 104', and a second pressure roll 209 is applied onto the layer of casing applied over the middle section of the pipe.

In a final step, the welded edge part of the welded inner coating and the casing is chamfered to form a tapered end 109 using a milling device. This gives the manufacture the possibility to inspect the welding between inner coating and the casing.

Also disclosed herein is an insulated pipe produced using the method described above

### References

- 100: Pipe
- 102: Inner carrier pipe
- 103: Middle section of the inner pipe
- 104, 104', 104": Inner coating
- 105a, 105b: End sections of the inner pipe
- 106: Thermal insulation layer
- 107: Assembly face
- 108: Casing
- 109: Tapered end of the welded edge part
- 110: Thin outer coating
- 112: End joining tools
- 200: Production line
- 202: Insulation material sprayer
- 204, 204', 204": Jaw
- 206: Casing extruder
- 208: Pressure roll
- 209: Pressure roll
- L: Longitudinal direction
- R: Rotational direction

## Claims

1. A method for producing insulated pipes (100) comprising an inner pipe (102), a casing layer (108) and insulation material (106), where the insulated pipe has an improved protection of the insulation material, the method comprising the steps of:
a) providing a pipe system comprising:
- an inner pipe (102) with a longitudinal axis (L) extending from a first end of the inner pipe to a second end of the inner pipe, the inner pipe comprising a middle section (103), a first end section (105a) at the first end of the inner pipe, and a second end section (105b) at the second end of the inner pipe;
- a layer of inner coating (104) covering the inner pipe (102), the layer of inner coating comprising one or more inner coating sub layers;
- one or more layers of insulation material (106) covering the layer of inner coating (104) such that:
• the insulation layer (106) covers the middle section (103) of the inner pipe covered by the inner coating (104), and
• the ends of the insulation layer tapers towards the end sections (105a, 105b), and
• the end sections (105a, 105b) comprises a section with an exposed layer of inner coating (104');
b) positioning a jaw (204') around the exposed layer of inner coating (104') at the first end section (105a) of the inner pipe (102);
c) heating the exposed layer of inner coating (104') using the jaw (204') to a temperature near or above the welding temperature of the materials which the inner coating (104) and a casing layer (108, 110) are made of;
d) removing the jaw (204');
e) covering the exposed layer of inner coating (104') and the insulation layer (106) with a layer of casing (108) extruded from a casing extruder (206);
f) positioning a jaw (204") around the exposed layer of inner coating (104') at the second end section (105b) of the inner pipe (102);
g) heating the exposed layer of inner coating using the jaw (204") to a temperature near or above the welding temperature of the materials which the inner coating (104) and the casing layer (108, 110) are made of;
h) removing the jaw (204"), and
i) covering the exposed layer of inner coating (104") at the second end section (105b) of the inner pipe with a layer of casing (108) extruded from the casing extruder (206).

2. A method according to claim 1, wherein the casing (108, 110) is extruded onto the exposed layers of inner coating (104', 104") and the insulation layer (106) by moving the pipe pass the casing extruder (206) or by moving the casing extruder (206) along the longitudinal axis (L) of the pipe.

3. A method according to any preceding claim, wherein the steps b) to e) and steps f) to i) are performed concurrently.

4. A method according to any preceding claim, wherein the pipe system is rotated along the longitudinal axis (L) of the pipe while:
- the pipe system and the casing extruder (206) moves in relation to each other, and
- the layer of casing (108, 110) is extruded onto the exposed layers of inner coating (104', 104") and the insulation layer (106),
whereby the casing layer (108) is applied onto the pipe system in a spiral, wherein the rotation of the pipe system and the movement of the pipe system and the extruder in relation to each other is adjusted such that there is an overlap between consecutive casing layers of between 1-10 cm, or between 3-8 cm, or between 4-6 cm or at 5 cm.

5. A method according to any preceding claim, wherein the pipe system is positioned on a line moving the pipe system in a longitudinal direction (L) towards and pass the casing extruder (206) during the production of the insulated pipe (100).

6. A method according to claim 4, wherein the pipe system is constantly being rotated (R) around the longitudinal axis (L) as the pipe system moves along the line.

7. A method according to any preceding claim, wherein after the jaw (204', 204") is positioning around the exposed layer of inner coating (104', 104") in step b) or f), the jaw (204', 204") moves along with the pipe system in the longitudinal direction (L) at the same speed as the pipe system before the jaw (204', 204") is removed in step d) and h).

8. A method according to any preceding claim, wherein removing the jaw (204', 204") in step d) and h) is done when the distance between the jaw (204', 204") and the casing extruder (206) is less than 5 cm, or between 1-5 cm or between 1-2 cm.

9. A method according to any preceding claim, wherein the jaw (204) is heated using radiant heating.

10. A method according to any preceding claim, wherein end joining tools (112) positioned between two inner pipes (102) are used to connect inner pipes (102), thereby forming a pipeline comprising a number of interconnected inner pipes 102, and wherein the end joining tools are removed again after the pipe system has been fully covered by the casing layer (108, 110) thereby proving a number separated insulated pipes (100).

11. A method according to any preceding claim, wherein the inner coating and/or the casing is polypropylene (PP) or polyethylene (PE).

12. A method according to any preceding claim, wherein the thickness of the inner coating is between 2-10 mm, or between 2,5-8 mm or between 3-6,5 mm or between 3-5 mm.

13. A method according to any preceding claim, wherein the insulation material is polyurethane (PUR) foam.

14. A method according to any preceding claim, wherein the welding temperature to which the exposed layer of inner coating (104') is heated in step c) and g) is between 180-240 °C, or between 200-240 °C, or between 220-240 °C, or between 230-240 °C, or 235 °C.

15. A method according to any preceding claim, wherein the temperature to which the inner coating is heated in step c) and g) is measured by an infrared thermometer.

16. A method according to any preceding claim, wherein one or more pressure rolls (208) are applied onto the layer of casing applied over the exposed layer of inner coating in step e) and i) pressuring the casing (108) closer to the inner coating (104').

17. A method according to claim 16, wherein the one or more pressure rolls (208) are also applied onto the layer of casing applied over the entire pipe.

18. A method according to claim 16 or 17, wherein only one pressure roll (208) is applied.

19. A method according to claim 16 or 17, wherein two or more pressure rolls (208, 209) are applied.

20. A method according to claim 19, wherein a first pressure roll (208) is applied onto the layer of casing applied over the exposed layer of inner coating in step e) and i) pressuring the casing (108) closer to the inner coating (104'), and a second pressure roll (209) is applied onto the layer of casing applied over the middle section of the pipe.

## Patentansprüche

1. Verfahren zur Herstellung von isolierten Rohren (100), umfassend ein inneres Rohr (102), eine Mantelschicht (108) und Isolierungsmaterial (106), wobei das isolierte Rohr einen verbesserten Schutz des Isolierungsmaterials aufweist, welches Verfahren die folgenden Schritte umfasst:
a) Bereitstellen eines Rohrsystems umfassend:
- ein inneres Rohr (102) mit einer Längsachse (L), die sich von einem ersten Ende des inneren Rohrs zu einem zweiten Ende des inneren Rohrs erstreckt, wobei das innere Rohr einen mittleren Abschnitt (103), einen ersten Endabschnitt (105a) am ersten Ende des inneren Rohrs und einen zweiten Endabschnitt (105b) am zweiten Ende des inneren Rohrs aufweist;
- eine Schicht von Innenbeschichtung (104), die das innere Rohr (102) abdeckt, wobei die Schicht von Innenbeschichtung eine oder mehrere innere Beschichtungsunterschichten umfasst;
- eine oder mehrere Schichten von Isolierungsmaterial (106), der die Schicht von Innenbeschichtung (104) abdeckt, so dass:
• die Isolierungsschicht (106) den mittleren Abschnitt (103) des inneren Rohrs abdeckt, das durch die Innenbeschichtung (104) abgedeckt ist, und
• die Enden der Isolierungsschicht sich gegen die Endabschnitte (105a, 105b) verjüngen, und
• die Endabschnitte (105a, 105b) einen Abschnitt mit einer freigelegten Schicht von Innenbeschichtung (104') aufweisen;
b) Positionieren einer Klemmbacke (204') um die freigelegte Schicht von Innenbeschichtung (104') am ersten Endabschnitt (105a) des inneren Rohrs (102) herum;
c) Aufwärmen der freigelegten Schicht von Innenbeschichtung (104') unter Verwendung der Klemmbacke (204') auf eine Temperatur nahe oder oberhalb von der Schweißtemperatur des Materials, aus dem die Innenbeschichtung (104) und eine Mantelschicht (108, 110) hergestellt sind;
d) Entfernen der Klemmbacke (204');
e) Abdecken der freigelegten Schicht von Innenbeschichtung (104') und der Isolierungsschicht (106) mit einer Mantelschicht (108), die von einem Mantelextruder (206) extrudiert ist;
f) Positionieren einer Klemmbacke (204") um die freigelegte Schicht von Innenbeschichtung (104') am zweiten Endabschnitt (105b) des inneren Rohrs (102) herum;
g) Aufwärmen der freigelegten Schicht von Innenbeschichtung unter Verwendung der Klemmbacke (204') auf eine Temperatur nahe oder oberhalb von der Schweißtemperatur des Materials, aus dem die Innenbeschichtung (104) und die Mantelschicht (108, 110) hergestellt sind;
h) Entfernen der Klemmbacke (204"), und
i) Abdecken der freigelegten Schicht von Innenbeschichtung (104") am zweiten Endabschnitt (105b) des inneren Rohrs mit einer Mantelschicht (108), die von einem Mantelextruder (206) extrudiert ist.

2. Verfahren nach Anspruch 1, wobei der Mantel (108, 110) auf die freigelegten Schichten von Innenbeschichtung (104', 104") und Isolierungsschicht (106) extrudiert wird durch Bewegen des Rohrs dem Mantelextruder (206) vorbei oder durch Bewegen des Mantelextruders (206) entlang der Längsachse (L) des Rohrs.

3. Verfahren nach einem der vorgehenden Ansprüche, wobei die Schritte b) bis e) und die Schritte f) bis i) gleichzeitig ausgeführt werden.

4. Verfahren nach einem der vorgehenden Ansprüche, wobei das Rohrsystem entlang der Längsachse (L) des Rohrs gedreht wird, während:
- das Rohrsystem und der Mantelextruder (206) sich relativ zueinander bewegen, und
- die Mantelschicht (108, 110) auf die freigelegten Schichten von Innenbeschichtung (104', 104") und Isolierungsschicht (106) extrudiert wird,
wobei die Mantelschicht (108) in einer Spirale auf das Rohrsystem aufgebracht wird, wobei die Rotation des Rohrsystems und die Bewegung des Rohrsystems und des Extruders relativ zueinander so eingestellt wird, dass es eine Überschneidung zwischen aufeinanderfolgenden Mantelschichten von zwischen 1-10 cm oder zwischen 3-8 cm oder zwischen 4-6 cm oder bei 5 cm gibt.

5. Verfahren nach einem der vorgehenden Ansprüche, wobei das Rohrsystem auf einer Linie positioniert ist, die das Rohrsystem in einer Längsrichtung (L) gegen den Mantelextruder (206) und diesem vorbei bewegt während der Herstellung des isolierten Rohrs (100).

6. Verfahren nach Anspruch 4, wobei das Rohrsystem konstant um die Längsachse (L) gedreht (R) wird, wenn das Rohrsystem sich entlang der Linie bewegt.

7. Verfahren nach einem der vorgehenden Ansprüche, wobei die Klemmbacke (204', 204"), nachdem die Klemmbacke (204', 204") in Schritt b) oder f) um die freigelegte Schicht von Innenbeschichtung (104', 104") herum positioniert ist, sich zusammen mit dem Rohrsystem in der Längsrichtung (L) bei der gleichen Geschwindigkeit wie das Rohrsystem bewegt, ehe die Klemmbacke (204', 204") in Schritt d) und h) entfernt wird.

8. Verfahren nach einem der vorgehenden Ansprüche, wobei die Entfernung der Klemmbacke (204', 204") in Schritt d) und h) erfolgt, wenn der Abstand zwischen der Klemmbacke (204', 204") und dem Mantelextruder (206) weniger als 5 cm oder zwischen 1-5 cm oder zwischen 1-2 cm ist.

9. Verfahren nach einem der vorgehenden Ansprüche, wobei die Klemmbacke (204) unter Verwendung von Strahlungsheizung aufgewärmt wird.

10. Verfahren nach einem der vorgehenden Ansprüche, wobei Endenverbindungswerkzeuge (112), die zwischen zwei inneren Rohren (102) positioniert sind, dafür verwendet werden, innere Rohre (102) zu verbinden, wodurch eine Rohrleitung gebildet wird, die eine Anzahl von verbundenen inneren Rohren 102 umfasst, und wobei die Endenverbindungswerkzeuge wieder entfernt werden, nachdem das Rohrsystem durch die Mantelschicht (108, 110) vollständig abgedeckt worden sind, wodurch eine Anzahl von getrennten isolierten Rohren (100) nachgewiesen wird.

11. Verfahren nach einem der vorgehenden Ansprüche, wobei die innere Beschichtung und/oder der Mantel Polypropylen (PP) oder Polyethylen (PE) ist.

12. Verfahren nach einem der vorgehenden Ansprüche, wobei die Dicke der Innenbeschichtung zwischen 2-10 mm oder zwischen 2,5-8 mm oder zwischen 3-6,5 mm oder zwischen 3-5 mm ist.

13. Verfahren nach einem der vorgehenden Ansprüche, wobei das Isolierungsmaterial Polyurethanschaum (PUR) ist.

14. Verfahren nach einem der vorgehenden Ansprüche, wobei die Schweißtemperatur, worauf die freigelegte Schicht von Innenbeschichtung (104') in Schritt c) und g) aufgewärmt wird, zwischen 180-240 °C oder zwischen 200-240 °C oder zwischen 220-240 °C oder zwischen 230-240 °C oder 235 °C ist.

15. Verfahren nach einem der vorgehenden Ansprüche, wobei die Temperatur, worauf die Innenbeschichtung in Schritt c) und g) aufgewärmt wird, durch ein Infrarotthermometer gemessen wird.

16. Verfahren nach einem der vorgehenden Ansprüche, wobei eine oder mehrere Druckrollen (208) auf die Mantelschicht aufgebracht werden, aufgebracht über die freigelegte Schicht von Innenbeschichtung in Schritt e) und i), wodurch der Mantel (108) näher an der Innenbeschichtung (104') gepresst wird.

17. Verfahren nach Anspruch 16, wobei die eine oder mehrere Druckrollen (208) auch auf die Mantelschicht aufgebracht wird bzw. werden, aufgebracht über das ganze Rohr.

18. Verfahren nach Anspruch 16 oder 17, wobei nur eine Druckrolle (208) aufgebracht wird.

19. Verfahren nach Anspruch 16 oder 17, wobei zwei oder mehrere Druckrollen (208, 209) aufgebracht werden.

20. Verfahren nach Anspruch 19, wobei eine erste Druckrolle (208) auf die Mantelschicht aufgebracht wird, aufgebracht über die freigelegte Schicht von Innenbeschichtung in Schritt e) und i), wodurch der Mantel (108) näher an der Innenbeschichtung (104') gepresst wird, und eine zweite Druckrolle (209) auf die Mantelschicht aufgebracht wird, aufgebracht über den mittleren Abschnitt des Rohrs.

## Revendications

1. Procédé de production de tuyaux isolés (100) comprenant un tuyau intérieur (102), une couche d'enveloppe (108) et un matériau isolant (106), le tuyau isolé présentant une protection améliorée du matériau isolant, le procédé comprenant les étapes de :
a) la fourniture d'un système de tuyaux comprenant :
- un tuyau intérieur (102) avec un axe longitudinal (L) s'étendant d'une première extrémité du tuyau intérieur à une deuxième extrémité du tuyau intérieur, le tuyau intérieur comprenant une section médiane (103), une première section d'extrémité (105a) à la première extrémité du tuyau intérieur et une deuxième section d'extrémité (105b) à la deuxième extrémité du tuyau intérieur ;
- une couche de revêtement intérieur (104) recouvrant le tuyau intérieur (102), la couche de revêtement intérieur comprenant une ou plusieurs sous-couches de revêtement intérieur ;
- une ou plusieurs couches de matériau isolant (106) recouvrant la couche de revêtement intérieur (104) si bien que :
• la couche isolante (106) recouvre la section médiane (103) du tuyau intérieur recouvert par le revêtement intérieur (104), et
• les extrémités de la couche isolante se rétrécissent vers les sections d'extrémité (105a, 105b), et
• les sections d'extrémité (105a, 105b) comprennent une section avec une couche exposée de revêtement intérieur (104') ;
b) le positionnement d'une mâchoire (204') autour de la couche exposée de revêtement intérieur (104') à la première section d'extrémité (105a) du tuyau intérieur (102) ;
c) le réchauffement de la couche exposée de revêtement intérieur (104') à l'aide de la mâchoire (204') à une température proche ou supérieure à la température de soudage des matériaux dont sont constitués le revêtement intérieur (104) et la couche d'enveloppe (108, 110) ;
d) le retrait de la mâchoire (204') ;
e) le recouvrement de la couche exposée de revêtement intérieur (104') et la couche d'isolation (106) d'une couche d'enveloppe (108) extrudée à partir d'une extrudeuse d'enveloppe (206) ;
f) le positionnement d'une mâchoire (204") autour de la couche exposée de revêtement intérieur (104') au niveau de la deuxième section d'extrémité (105b) du tuyau intérieur (102) ;
g) le réchauffement de la couche exposée de revêtement intérieur à l'aide de la mâchoire (204") à une température proche ou supérieure à la température de soudage des matériaux dont sont constitués le revêtement intérieur (104) et la couche d'enveloppe (108, 110) ;
h) le retrait de la mâchoire (204"), et
i) le recouvrement de la couche exposée de revêtement intérieur (104") au niveau de la deuxième section d'extrémité (105b) du tuyau intérieur avec une couche d'enveloppe (108) extrudée à partir de l'extrudeuse d'enveloppe (206).

2. Procédé selon la revendication 1, dans lequel l'enveloppe (108, 110) est extrudée sur les couches exposées de revêtement intérieur (104', 104") et la couche d'isolation (106) en déplaçant le tuyau devant l'extrudeuse d'enveloppe (206) ou en déplaçant l'extrudeuse d'enveloppe (206) le long de l'axe longitudinal (L) du tuyau.

3. Procédé selon l'une quelconque des revendications précédentes, dans lequel les étapes b) à e) et les étapes f) à i) sont exécutées simultanément.

4. Procédé selon l'une quelconque des revendications précédentes, dans lequel le système de tuyaux est mis en rotation le long de l'axe longitudinal (L) du tuyau tandis que :
- le système de tuyaux et l'extrudeuse d'enveloppe (206) se déplacent l'un par rapport à l'autre, et
- la couche d'enveloppe (108, 110) est extrudée sur les couches exposées de revêtement intérieur (104', 104") et la couche d'isolation (106),
la couche d'enveloppe (108) étant appliquée sur le système de tuyaux en spirale, la rotation du système de tuyaux et le mouvement du système de tuyaux et de l'extrudeuse l'un par rapport à l'autre étant ajustés si bien qu'il y a un chevauchement entre des couches d'enveloppe consécutives dans la plage de 1 à 10 cm, ou de 3 à 8 cm, ou de 4 à 6 cm ou à 5 cm.

5. Procédé selon l'une quelconque des revendications précédentes, dans lequel le système de tuyaux est positionné sur une ligne déplaçant le système de tuyaux dans une direction longitudinale (L) vers et devant l'extrudeuse d'enveloppe (206) pendant la production du tuyau isolé (100).

6. Procédé selon la revendication 4, dans lequel le système de tuyaux tourne constamment (R) autour de l'axe longitudinal (L) lorsque le système de tuyaux se déplace le long de la ligne.

7. Procédé selon l'une quelconque des revendications précédentes, dans lequel après que la mâchoire (204', 204") est positionnée autour de la couche exposée de revêtement intérieur (104', 104") à l'étape b) ou f), la mâchoire (204', 204") se déplace avec le système de tuyaux dans la direction longitudinale (L) à la même vitesse que le système de tuyaux avant que la mâchoire (204', 204") ne soit retirée à l'étape d) et h).

8. Procédé selon l'une quelconque des revendications précédentes, dans lequel le retrait de la mâchoire (204', 204") à l'étape d) et h) est effectué lorsque la distance entre la mâchoire (204', 204") et l'extrudeuse d'enveloppe (206) est inférieure à 5 cm ou dans la plage de 1 à 5 cm ou de 1 à 2 cm.

9. Procédé selon l'une quelconque des revendications précédentes, dans lequel la mâchoire (204) est réchauffée en utilisant un chauffage par rayonnement.

10. Procédé selon l'une quelconque des revendications précédentes, dans lequel des outils de jonction d'extrémité (112) positionnés entre deux tuyaux intérieurs (102) sont utilisés pour raccorder des tuyaux intérieurs (102), formant ainsi une canalisation comprenant un certain nombre de tuyaux intérieurs (102) raccordés entre eux, et dans lequel les outils de jonction d'extrémité sont à nouveau retirés après que le système de tuyaux a été entièrement recouvert par la couche d'enveloppe (108, 110) prouvant ainsi un certain nombre de tuyaux isolés séparés (100).

11. Procédé selon l'une quelconque des revendications précédentes, dans lequel le revêtement intérieur et / ou l'enveloppe est en polypropylène (PP) ou en polyéthylène (PE).

12. Procédé selon l'une quelconque des revendications précédentes, dans lequel l'épaisseur du revêtement intérieur est comprise dans la plage de 2 à 10 mm, ou de 2,5 à 8 mm ou de 3 à 6,5 mm ou de 3 à 5 mm.

13. Procédé selon l'une quelconque des revendications précédentes, dans lequel le matériau isolant est une mousse de polyuréthane (PUR).

14. Procédé selon l'une quelconque des revendications précédentes, dans lequel la température de soudage à laquelle la couche exposée de revêtement intérieur (104') est chauffée à l'étape c) et g) est dans la plage de 180 à 240 °C, ou dans la plage de 200 à 240 °C, ou dans la plage de 220 à 240 °C, ou dans la plage de 230 à 240 °C, ou 235 °C.

15. Procédé selon l'une quelconque des revendications précédentes, dans lequel la température à laquelle le revêtement intérieur est chauffé à l'étape c) etg) est mesurée par un thermomètre infrarouge.

16. Procédé selon l'une quelconque des revendications précédentes, dans lequel un ou plusieurs rouleaux de pression (208) sont appliqués sur la couche d'enveloppe appliquée sur la couche exposée de revêtement intérieur à l'étape e) et i) en pressant l'enveloppe (108) plus près du revêtement intérieur (104').

17. Procédé selon la revendication 16, dans lequel le ou les rouleaux de pression (208) sont également appliqués sur la couche d'enveloppe appliquée sur l'ensemble du tuyau.

18. Procédé selon la revendication 16 ou 17, dans lequel un seul rouleau de pression (208) est appliqué.

19. Procédé selon la revendication 16 ou 17, dans lequel deux rouleaux de pression ou plus (208, 209) sont appliqués.

20. Procédé selon la revendication 19, dans lequel un premier rouleau de pression (208) est appliqué sur la couche d'enveloppe appliquée sur la couche exposée de revêtement intérieur à l'étape e) et i) en pressant l'enveloppe (108) plus près du revêtement intérieur (104'), et un deuxième rouleau de pression (209) est appliqué sur la couche d'enveloppe appliquée sur la section médiane du tuyau
